# EUROPÄISCHE PATENTANMELDUNG

(11) **EP 0 947 271 A2**
(43) Veröffentlichungstag der Anmeldung: **06.10.1999**
(21) Anmeldenummer: 99105993.2
(22) Anmeldetag: 25.03.1999
(51) Int. Cl.: B23B 47/28

(54) **Bohrlehre**

(30) Priorität: 30.03.1998 DE 29805785 U
(71) Anmelder: SFS Industrie Holding AG, 9435 Heerbrugg (CH)
(72) Erfinder: Politi, Sandro, 33074 Fontanafredda (PN) (IT)
(74) Vertreter: Ludescher, Hans

(57) **Zusammenfassung**

Bei einer Bohrlehre zur Herstellung von Bohrungen in Rahmen und Flügeln von Fenstern oder Türen für den Einsatz oder für die Befestigung von Scharnieren oder Bändern sind an einem Tragprofil (6) zwei oder mehr als zwei Lehrenteile (4) mit Bohrlöchern (7, 8) festlegbar. An einem oder an beiden Endbereichen des Tragprofils sind Anschlagelemente (5) zur Ausrichtung gegenüber dem zu bohrenden Rahmen oder Flügel vorgesehen. Jeder Lehrenteil (4) weist jeweils in einem Winkel von zumindest annähernd 90° zueinander liegenden Ebenen ausgerichtete Bohrlöcher (7, 8) und zwei Anschlagstege (9, 10) auf, wobei diese Anschlagstege (9, 10) in zwei um die Längsachse des Tragprofils (6) um 180° verdrehten Stellungen entweder an der Innenbegrenzung eines Rahmens oder an der Außenbegrenzung eines Flügels anliegen können. An einem oder an beiden Endbereichen des Tragprofils (6) sind zwei Anschlagelemente (5) für den jeweils um 180° verdrehten Einsatz angeordnet.

## Beschreibung

Die Erfindung betrifft eine Bohrlehre zur Herstellung von Bohrungen in Rahmen und Flügeln von Fenstern oder Türen für den Einsatz oder für die Befestigung von Sharnieren oder Bändern, bei der an einem Tragprofil zwei oder mehr als zwei Lehrenteile mit Bohrlöchern festlegbar sind, wobei an einem oder an beiden Endbereichen des Tragprofils Anschlagelemente zur Ausrichtung gegenüber dem zu bohrenden Rahmen oder Flügel vorgesehen sind.

Solche Bohrlehren sind in verschiedenen Ausführungsvarianten bekannt geworden. Dabei bestehen zwei Möglichkeiten, die Bohrlöcher für die Befestigung von Scharnieren oder Bändern herzustellen. Eine Möglichkeit sieht vor, vorerst die Flügel von Fenstern oder Türen in die Rahmen einzulegen, d.h. praktisch in die endgültige Lage relativ zueinander zu bringen. Da die Flügel gegenüber dem Rahmen nicht in irgendeiner Lage, sondern mit einem umlaufend gleichbleibenden Spiel eingesetzt sein müssen, bedarf es der Einlage zusätzlicher Distanzstücke. Wenn der Flügel bei der endgültigen Montage nicht unmittelbar auf dem Rahmen aufliegen soll, weil eventuell ein Dichtelement einzusetzen ist, müssen auch dort Zwischenlagen eingesetzt werden, um die Bohrungen für die Befestigung von Scharnieren oder Bändern schlußendlich an der richtigen Stelle vorbereiten zu können. Für eine derartige Bearbeitung ist eine schienenförmige Bohrlehre vorgesehen, welche entsprechende Bohrungen zur Herstellung der Löcher sowohl in einem Rahmen als auch in einem in die endgültige Lage aufgelegten Flügel aufweist.

Bei einer anderen Bearbeitungsart werden Rahmen und Flügel getrennt bearbeitet, wobei für die Herstellung der Löcher für die Befestigung von Scharnieren oder Bändern in einem Rahmen und in einem Flügel getrennte und jeweils angepaßte Bohrlehren eingesetzt werden. Diesfalls sind also eine Bohrlehre mit Lehrenteilen und Anschlagelementen für den Rahmen und eine Bohrlehre mit Lehrenteilen und Anschlagelementen für den Flügel vorhanden. Natürlich müssen beide Bohrlehren in exakter Abstimmung zueinander gefertigt und eingestellt werden.

Die vorliegende Erfindung hat sich nun zur Aufgabe gestellt, für die Herstellung von Bohrungen in Rahmen und Flügeln von Fenstern oder Türen eine einzige Bohrlehre zu schaffen, welche für die getrennte Bearbeitung von Rahmen und Flügeln einsetzbar ist.

Erfindungsgemäß wird dazu vorgeschlagen, daß der Lehrenteil jeweils in einem Winkel von zumindest annähernd 90° zueinander liegenden Ebenen ausgerichtete Bohrlöcher und zwei Anschlagstege aufweist, welche in zwei um die Längsachse des Tragprofils um 180° verdrehten Stellungen entweder an der Innenbegrenzung eines Rahmens oder an der Außenbegrenzung eines Flügels anlegen können, und daß an einem oder an beiden Endbereichen des Tragprofils zwei Anschlagelemente für den jeweils um 180° verdrehten Einsatz angeordnet sind.

Da die Bohrlöcher in den einzelnen Lehrenteilen in exakter Abstimmung zueinander angeordnet sind, ist immer eine Übereinstimmung der hergestellten Bohrungen in dem Rahmen und in dem Flügel gewährleistet. Weil außerdem jeweils Anschläge für beide um jeweils 180° verdrehte Stellungen der Bohrlehre vorhanden sind, ist eine Einstellung der Bohrlehre derart möglich, daß die exakten Abstände und das genaue gewünschte Spiel bei der Montage des Flügels in dem Rahmen vorhanden sind.

Ob nun zwei oder mehr als zwei Lehrenteile an dem gleichen Tragprofil angeordnet sind, ist völlig belanglos, da die jeweils für ein Scharnier oder ein Band herzustellenden Bohrungen an dem Rahmen und an dem Flügel in exakter Übereinstimmung zueinander hergestellt werden können. Zur Erreichung eines gleichbleibenden und immer genau eingerichteten Spiels zwischen Rahmen und Flügel bedarf es somit lediglich noch des exakten Einstellens der Anschlagelemente.

Eine vorteilhafte Ausgestaltung sieht vor, daß der Lehrenteil im Querschnitt T-förmig ausgebildet ist, wobei dessen Quersteg die beidseitigen Anschlagstege und der rechtwinklig dazu abstehende Abschnitt eine Anlagefläche auf der Oberseite des Rahmens oder des Flügels bilden. Damit ist in beiden um 180° verdrehten Stellungen nicht nur eine exakte Auflage auf dem Rahmen oder dem Flügel möglich, sondern ebenfalls ein exakter Anschlag an der Innenbegrenzung eines Rahmens oder an der Außenbegrenzung eines Flügels gewährleistet.

Eine mit Vorteil einsetzbare Konstruktion liegt darin, daß jeder Lehrenteil im Mittelbereich des Quersteges eine in Längsrichtung desselben durchgehende Öffnung zum formschlüssigen Aufschieben auf das Tragprofil aufweist. Dies bringt nicht nur eine verdrehfeste, formschlüssige Verbindung zwischen den Lehrenteilen und dem Tragprofil mit sich, sondern es wird zusätzlich eine Führung für die Längsverschiebung der Lehrenteile geschaffen, damit diese in die ordnungsgemäße Stellung in bezug auf die Länge des Tragprofils gebracht werden können. In der gewünschten Einstellung sind die Lehrenteile dann lediglich noch gegenüber dem Tragprofil zu fixieren, was mit einfachen konstruktiven Mitteln bewerkstelligt werden kann.

Eine Möglichkeit sieht vor, daß die Anschlagelemente verschiebbar, jedoch feststellbar an einem Lehrenteil angeordnet sind. Somit ist eine Anpassung der Anschlagelemente an die jeweils einem oder beiden Endbereichen des Tragprofils zugeordneten Lehrenteile möglich, und weil die Anschlagelemente auch noch am Lehrenteil selbst feststellbar angeordnet sind, ist immer eine exakte Lage und Übereinstimmung bei der Herstellung von Bohrungen in Rahmen und in Flügeln möglich.

Eine Ausführungsvariante sieht vor, daß die Anschlagelemente an einem von den Lehrenteilen getrennten, gegenüber dem Tragprofil fixierbaren Halter verschiebbar, jedoch feststellbar angeordnet sind. Demgemäß ist es auch denkbar, einen getrennt von den Anschlagelementen ausgebildeten Halter vorzusehen, der feststellbare Anschlagelemente aufweist.

Eine einfache konstruktive Gestaltung liegt dann vor, wenn den Endbereichen des Tragprofils zugewandte Begrenzungsflächen eines Lehrenteiles und/oder eines Halters Anschlagelemente bilden. Dies ist speziell bei der Herstellung von Bohrungen in dem Rahmen selbst von besonderem Vorteil, da die Begrenzungsflächen in diesem Fall z.B. am oberen und am unteren Querrahmenteil anlegen können. Eine Verschiebung in Längsrichtung des mit Bohrungen zu versehenden Rahmenteiles wird dadurch verunmöglicht.

Bei den Anschlagelementen für den Einsatz bei der Herstellung von Bohrungen in einem Flügel ist es einfacher, die obere und die untere Außenbegrenzung eines Flügels als Anschlagfläche heranzuziehen, wobei diesfalls andere Möglichkeiten von Anschlagelementen sinnvoll sind. In diesem Zusammenhang wird vorgeschlagen, daß die Anschlagelemente von verschiebbaren, jedoch feststellbaren Schienen gebildet sind, welche an ihrem einen Ende einen quer zu der Schiene vorstehenden und an der Schiene festlegbaren Anschlagzapfen aufweisen. Solcherart ausgebildete Anschlagelemente stehen bei der Herstellung der Bohrungen in einem Rahmen keinesfalls hinderlich im Wege und bringen für die Herstellung der Bohrungen in einem Flügel eine hervorragende und genaue Anschlagwirkung mit sich.

Eine Kombination von verschiedenen Anschlagelementen erweist sich bei einer Bohrlehre, welche um 180° verdreht sowohl bei Rahmen als auch bei Flügeln einsetzbar ist, als besonders vorteilhaft. Diese besondere Ausgestaltung sieht vor, daß den Endbereichen des Tragprofils zugewandte Begrenzungsflächen eines Lehrenteiles und/oder eines Halters die Anschlagelemente für den Einsatz als Innenanschläge an einem Rahmen bilden und die gegenüber einem Lehrenteil und/oder einem Halter verschiebbaren, jedoch an diesem bzw. diesen festlegbaren Anschlagelemente für den Einsatz als Außenanschläge bei einem Flügel vorgesehen sind.

Weitere erfindungsgemäße Merkmale und besondere Vorteile werden in der nachstehenden Beschreibung anhand der Zeichnungen noch näher erläutert. Es zeigen:
- Fig. 1: eine Schrägsicht einer Bohrlehre;
- Fig. 2: einen Einsatz der Bohrlehre bei einem Flügel eines Fensters oder einer Tür;
- Fig. 3: eine Schrägsicht eines Einsatzes der Bohrlehre in einer um 180° verdrehten Stellung an einem Rahmen von Fenstern oder Türen;
- Fig. 4: eine vergrößerte Darstellung des Bereiches IV in Fig. 2;
- Fig. 5: eine vergrößerte Darstellung des Bereiches V in Fig. 3.

Die Bohrlehre 1 zur Herstellung von Bohrungen in Rahmen 2 und Flügeln 3 von Fenstern oder Türen soll für die nachträgliche exakte Montage von Scharnieren oder Bändern ein Hilfsmittel sein. Die Bohrlehre besteht im wesentlichen aus Lehrenteilen 4 und Anschlagelementen 5, wobei die Lehrenteile 4 und die Anschlagelemente 5 an einem Tragprofil 6 festlegbar sind.

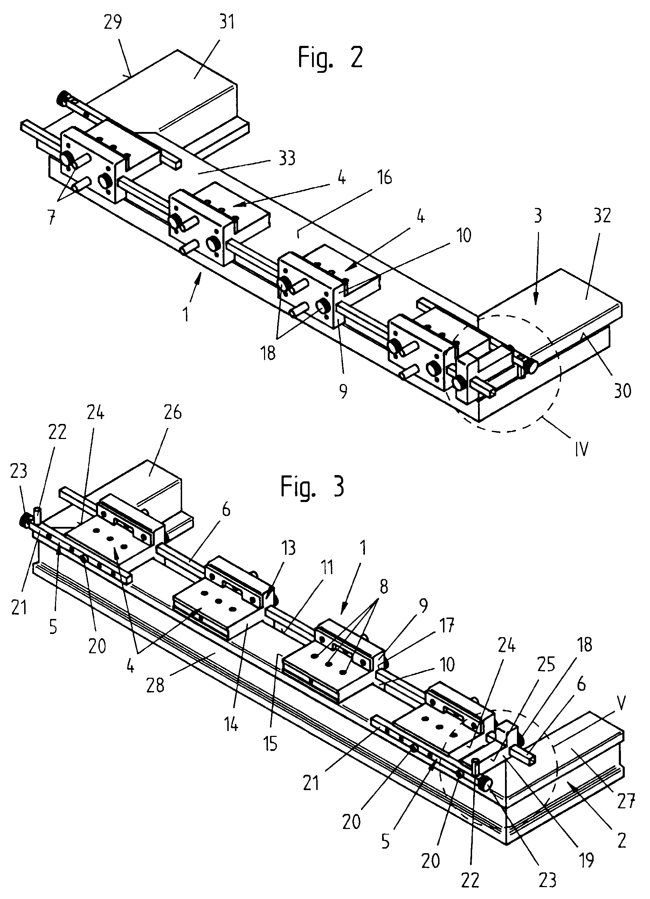

Jeder Lehrenteil 4 ist mit Bohrlöchern 7 und 8 versehen, welche zumindest annähernd in einem Winkel von 90° zueinander angeordnet sind oder in zumindest annähernd 90° zueinander liegenden Ebenen ausgerichtet werden. Die Bohrlöcher 7 dienen dabei zur Herstellung der Bohrungen in einem Flügel und die Bohrlöcher 8 zur Herstellung der Bohrungen in einem Rahmen. Bei der Lage nach Fig. 2 werden an sich nur die jeweils unteren Bohrlöcher 7 benötigt. Hier sind aber zwei übereinanderliegende Bohrlöcher 7 vorhanden, damit die Bohrlehre an beiden seitlichen Begrenzungsprofilen eines Rahmens bzw. an beiden Flügeln bei z.B. zweiflügeligen Fenstern oder Türen eingesetzt werden kann. In einem solchen Falle wird die ganze Bohrlehre einfach um 180° verdreht, so daß der vorher ganz unten liegende Lehrenteil den bezogen auf den Rahmen bzw. den Flügel oberen Abschluß der Bohrlehre bildet.

Die Lehrenteile 4 weisen zwei Anschlagstege 9 und 10 auf, welche in zwei um die Längsachse des Tragprofils 6 um 180° verdrehten Stellungen entweder an der Innenbegrenzung 11 des Rahmens 2 oder aber an der Außenbegrenzung 12 des Flügels 3 anliegen können.

Jeder Lehrenteil 4 wird von einem Quersteg 13 und von einem rechtwinklig dazu abstehenden Abschnitt 14 gebildet. Auf diese Weise ist der Lehrenteil 4 im Querschnitt annähernd T-förmig ausgeführt. Der Quersteg 13 umfaßt die beidseitigen Anschlagstege 9 und 10 und der rechtwinklig dazu abstehende Abschnitt 14 bildet eine Anlagefläche auf der Oberseite 15 des Rahmens 2 bzw. der Oberseite 16 des Flügels 3.

Im Mittelbereich des Quersteges 13 weist jeder Lehrenteil 4 eine durchgehende Öffnung 17 auf, um die Lehrenteile 4 formschlüssig auf das Tragprofil 6 aufschieben zu können. Mittels Feststellschrauben 18 können die Lehrenteile 4 in einer speziellen Lage in bezug auf die Längsrichtung des Tragprofils 6 fixiert werden. Da in jedem Lehrenteil 4 die Bohrlöcher 7 und 8 sowohl für die Herstellung von Bohrungen in einem Rahmen und in einem Flügel angeordnet sind, ist immer eine exakte Übereinstimmung möglich, weil die gleiche Bohrlehre sowohl für den Rahmen als auch für den Flügel verwendet werden kann.

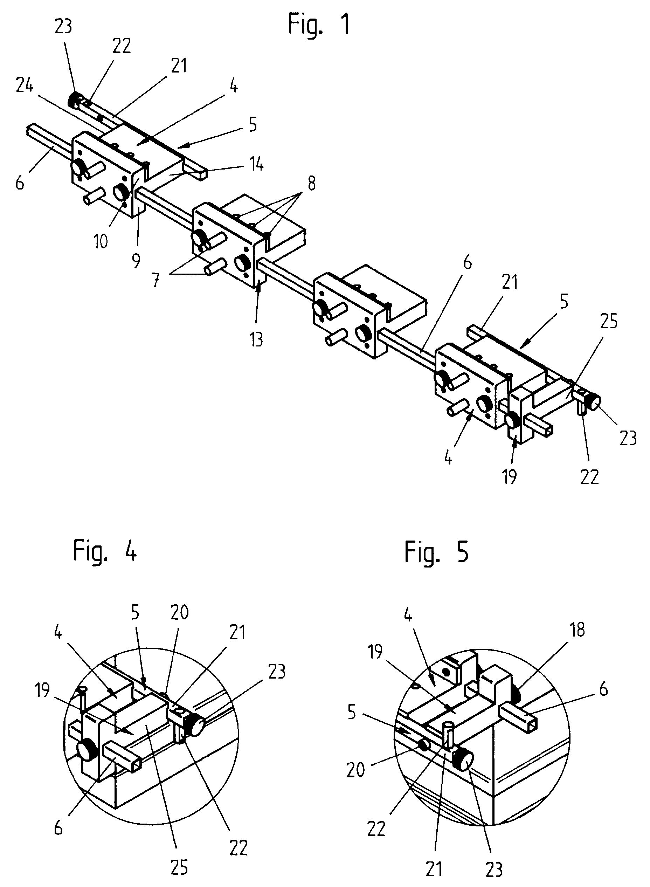

Die Anschlagelemente 5 sind vorteilhaft an einem Lehrenteil 4 oder aber an einem von den Lehrenteilen 4 getrennten, gegenüber dem Tragprofil 6 fixierbaren Halter 19 verschiebbar, jedoch feststellbar angeordnet. Es ist aber auch möglich, die Anschlagelemente 5 sowohl an einem Lehrenteil 4 als auch an einem entsprechenden Halter 19 feststellbar anzuordnen, was besonders gut den Fig. 1 und 3, jeweils rechts unten dargestellt, zu entnehmen ist. Die Anschlagelemente 5 sind mittels Schrauben 20 an den Lehrenteilen 4 bzw. an dem Halter 19 fixierbar. Bei dem hier dargestellten Ausführungsbeispiel sind die Anschlagelemente 5 von verschiebbaren, jedoch feststellbaren Schienen 21 gebildet, welche an ihrem einen Ende einen quer zur Schiene 21 vorstehenden Anschlagzapfen 22 aufweisen. Der Anschlagzapfen 22 ist gegenüber der Schiene 21 durch eine weitere Schraube 23 feststellbar.

Anschlagelemente können aber auch von den Endbereichen des Tragprofils 6 zugewandten Begrenzungsflächen 24 der Lehrenteile 4 oder aber von entsprechenden Begrenzungsflächen 25 eines Halters 19 gebildet werden.

Die vorteilhafteste, aus den Zeichnungen ersichtliche Konstruktion liegt darin, daß die Begrenzungsflächen 24 bzw. 25 eines einem Endbereich des Tragprofils 6 zugewandten Lehrenteiles 4 bzw. eines Halters 19 die Anschlagelemente bilden, um die Bohrlehre beim Herstellen der Bohrungen in einem Rahmen einzusetzen. Die Begrenzungsflächen 24 bzw. 25 dienen diesfalls praktisch als Innenanschläge an einem Rahmen, d.h. liegen an den Innenbegrenzungen des oberen und des unteren Querprofiles 26, 27 des Rahmens 2 an. Der Anschlagsteg 10 eines jeden Lehrenteiles 4 liegt dabei an der Innenbegrenzung des vertikalen Profilabschnittes 28 des Rahmens 2 an.

Beim Einsatz zur Herstellung der Bohrungen in dem Flügel 3 kommen die Anschlagelemente 5 mit den Anschlagzapfen 22 zum Einsatz. Die Anschlagzapfen 22 liegen an den Außenbegrenzungen 29 bzw. 30 der oberen und der unteren Querprofile 31, 32 des Flügels 3 an, und die Anschlagstege 9 der Lehrenteile 4 dienen als Anschlag bei der Anlage an den Begrenzungsflächen 12 der vertikalen Profilabschnitte 33 des Flügels 3.

Daß die Bohrlöcher 7 und 8 aus entsprechenden Hülsen beispielsweise aus Hartmetall gefertigt sind, versteht sich von selbst, denn es soll ja eine größtmögliche Lebensdauer solcher Bohrlehren bzw. zumindest der Lehrenteile erreicht werden.

Was die exakte konstruktive Gestaltung der Lehrenteile und der Anschlagelemente anbelangt, sind verschiedenste Varianten vorstellbar. Wesentlich und wichtig ist jedoch, daß die Lehrenteile sowohl zur Herstellung von Bohrungen in Rahmen als auch in Flügeln einsetzbar, Anschlagstege für den um 180° verdrehten Einsatz sowohl an Rahmen als auch an Flügeln geeignet und für beide Einsatzstellungen sowohl an einem Rahmen als auch an einem Flügel entsprechende Anschlagelemente vorhanden sind. Damit wird es möglich, mit ein und derselben Bohrlehre nicht nur die Bohrungen in einem Rahmen, sondern auch die Bohrungen in einem Flügel herstellen zu können, ohne daß der Flügel bereits in den Rahmen eingesetzt sein muß.

## Patentansprüche

1. Bohrlehre zur Herstellung von Bohrungen in Rahmen und Flügeln von Fenstern oder Türen für den Einsatz oder für die Befestigung von Scharnieren oder Bändern, bei der an einem Tragprofil zwei oder mehr als zwei Lehrenteile mit Bohrlöchern festlegbar sind, wobei an einem oder an beiden Endbereichen des Tragprofils Anschlagelemente zur Ausrichtung gegenüber dem zu bohrenden Rahmen oder Flügel vorgesehen sind, **dadurch gekennzeichnet**, daß der Lehrenteil (4) jeweils in einem Winkel von zumindest annähernd 90° zueinander liegenden Ebenen ausgerichtete Bohrlöcher (7, 8) und zwei Anschlagstege (9, 10) aufweist, welche in zwei um die Längsachse des Tragprofils (6) um 180° verdrehten Stellungen entweder an der Innenbegrenzung (11) eines Rahmens (2) oder an der Außenbegrenzung (12) eines Flügels (3) anliegen können, und daß an einem oder an beiden Endbereichen des Tragprofils (6) zwei Anschlagelemente (5) für den jeweils um 180° verdrehten Einsatz angeordnet sind.

2. Bohrlehre nach Anspruch 1, dadurch gekennzeichnet, daß der Lehrenteil (4) im Querschnitt T-förmig ausgebildet ist, wobei dessen Quersteg (13) die beidseitigen Anschlagstege (9, 10) und der rechtwinklig dazu abstehende Abschnitt (14) eine Anlagefläche auf der Oberseite (15, 16) des Rahmens (2) oder des Flügels (3) bilden.

3. Bohrlehre nach Anspruch 1, dadurch gekennzeichnet, daß jeder Lehrenteil (4) im Mittelbereich des Quersteges (13) eine in Längsrichtung desselben durchgehende Öffnung (17) zum formschlüssigen Aufschieben auf das Tragprofil (6) aufweist.

4. Bohrlehre nach einem der Ansprüche 1 bis 3, dadurch gekennzeichnet, daß die Anschlagelemente (5) verschiebbar, jedoch feststellbar an einem Lehrenteil (4) angeordnet sind.

5. Bohrlehre nach einem der Ansprüche 1 bis 3, dadurch gekennzeichnet, daß die Anschlagelemente (5) an einem von den Lehrenteilen (4) getrennten, gegenüber dem Tragprofil (6) fixierbaren Halter (19) verschiebbar, jedoch feststellbar angeordnet sind.

6. Bohrlehre nach einem der Ansprüche 1 bis 3, dadurch gekennzeichnet, daß den Endbereichen des Tragprofils (6) zugewandte Begrenzungsflächen (24, 25) eines Lehrenteiles (4) und/oder eines Halters (19) Anschlagelemente bilden.

7. Bohrlehre nach einem der Ansprüche 1 bis 6, dadurch gekennzeichnet, daß die Anschlagelemente (5) von verschiebbaren, jedoch feststellbaren Schienen (21) gebildet sind, welche an ihrem einen Ende einen quer zu der Schiene (21) vorstehenden und an der Schiene (21) festlegbaren Anschlagzapfen (22) aufweisen.

8. Bohrlehre nach einem der Ansprüche 1 bis 7, dadurch gekennzeichnet, daß den Endbereichen des Tragprofils (6) zugewandte Begrenzungsflächen (24, 25) eines Lehrenteiles (4) und/oder eines Halters (19) die Anschlagelemente für den Einsatz als Innenanschläge an einem Rahmen (2) bilden und die gegenüber einem Lehrenteil (4) und/oder einem Halter (19) verschiebbaren, jedoch an diesem bzw. diesen festlegbaren Anschlagelemente (5) für den Einsatz als Außenanschläge bei einem Flügel (3) vorgesehen sind.
